# FASCICULE DE BREVET EUROPEEN

(11) **EP 0 491 783 B1**
(45) Date de publication et mention de la délivrance du brevet: **18.11.1993**
(21) Numéro de dépôt: 90913708.5
(22) Date de dépôt: 12.09.1990
(51) Int. Cl.: G01K 7/00, G05F 3/24

(54) **CIRCUIT DE DETECTION DE SEUIL DE TEMPERATURE, DE LUMIERE, ET DE TROP BASSE FREQUENCE D'HORLOGE**
DETEKTORSCHALTUNG VON TEMPERATURPEGEL, LICHT UND ZU NIEDRIGER TAKTFREQUENZ
CIRCUIT FOR THE DETECTION OF TEMPERATURE THRESHOLD, OF LIGHT AND OF UNDULY LOW CLOCK FREQUENCY

(30) Priorité: 12.09.1989 FR 8911881
(43) Date de publication de la demande: 01.07.1992
(73) Titulaire: SGS-THOMSON MICROELECTRONICS S.A., 94250 Gentilly (FR)
(72) Inventeur: FRUHAUF, Serge, F-13790 Peynier (FR); MARTIN, Michel, F-13006 Marseille (FR)
(74) Mandataire: Schmit, Christian Norbert Marie
(86) Numéro de dépôt international: FR9000655
(87) Numéro de publication internationale: WO9104473

(56) Documents cités:
- EP-A- 0 240 807
- EP-A- 0 306 396
- DE-A- 2 941 285
- GB-A- 2 070 820
- GB-A- 2 071 955
- IEEE JOURNAL OF SOLID-STATE CIRCUITS, volume 23, no 3,juin 1988, IEEE, W.M. SANSEN et al.: "A CMOS temperature-compensated current reference", pages 821-824

## Description

La présente invention a pour objet un circuit de détection de seuil de température, de lumière et de trop basse fréquence d'horloge, utilisable dans tous les domaines où de tels contrôles doivent être exercés. l'invention est plus particulièrement utilisable dans le domaine des circuits intégrés et dans celui, dans le domaine des circuits pour carte à puce ou à mémoire.

Il est connu que la température des circuits intégrés électroniques, tels les cartes à puce, à mémoire ou autre circuits programmables, augmente pendant leur fonctionnement et en particulier lors de leur programmation. Deux seuils de température sont observés, un premier à partir duquel le circuit ne fonctionne plus normalement mais retrouve son fonctionnement normal si sa température redescend en-dessous de ce seuil, un second pour lequel il y a claquage du circuit intégré.

On voit donc que si la cadence de programmation est trop importante, la temperature du circuit va beaucoup augmenter provoquant soit une programmation erronée, soit, à l'extrême, la destruction du circuit. On peut remarquer de plus que des fraudeurs pourraient être tentés de porter le circuit intégré à une température supérieure à la limite de fonctionnement normal, provoquant, soit une programmation erronée, soit une modification du contenu mémoire.

Un circuit de détection du premier seuil de température fournit un signal binaire utilisable par exemple pour le contrôle d'accès du circuit : on peut alors interdire le fonctionnement du circuit pour une température supérieure à ce premier seuil de température.

On connaît des détecteurs de température à base de circuits intégrés comportant principalement un transistor MOS polarisé en direct et dont le seuil de conduction est connu pour varier avec la température, de l'ordre de 2 mv/°c. Ce détecteur n'est pas très sensible puisqu'une grande variation de température ne provoque qu'une petite variation de tension. Il n'est de plus pas très fiable car il est connu que la tension de seuil n'est pas exactement reproductible d'un circuit intégré à l'autre, du fait des différences de concentrations d'impuretés.

On connaît d'autres détecteurs utilisant essentiellement un transistor MOS polarisé en inverse par une alimentation électrique, dont le courant est connu pour varier de manière sensible avec la température : par exemple, le courant peut doubler pour une augmentation d'une dizaine de degrés de la température. Un tel détecteur est par exemple décrit dans le document EP-A-0 306 396.

Mais dans un tel détecteur, le courant dépend du niveau de la tension d'alimentation. Or ce niveau varie typiquement entre 4,5 et 5,5 volts pour un niveau nominal de 5 volts : caractéristique intrinsèque des circuits d'alimentation utilisés. De plus, des perturbations externes, notamment celles appliquées par des fraudeurs, peuvent également faire varier le niveau de l'alimentation.

La variation de courant induite par la variation du niveau de la tension d'alimentation va provoquer le basculement du détecteur pour une tension inférieure ou supérieure à la tension de seuil du circuit à détecter. Dans le premier cas, on a une fausse alarme qui ne fait que gêner l'utilisation du circuit, par exemple en ralentissant le temps d'accès. Dans le second cas, on autorise l'utilisation du circuit au-delà de sa température de seuil : le détecteur ne remplit plus sa fonction. Il n'est donc pas utilisable tel quel.

L'invention remédie à cet inconvénient en proposant la mise en oeuvre d'un autre phénomène physique connu. On sait que le courant dans une diode polarisée en inverse augmente de manière significative avec la température - typiquement le courant double tous les 10° C pour le silicium. On montre qu'à partir d'une certaine température l'augmentation devient plus importante. Le courant dû aux porteurs minoritaires - courant inverse de saturation -, jusque-là prédominant, devient inférieur au courant dû aux porteurs majoritaires - courant de diffusion. De plus, la température ainsi définie est en fait la température à partir de laquelle le circuit dans lequel est intégrée la diode, commence à ne plus fonctionner normalement : cette température est la température de seuil Ts du circuit intégré.

A cette température de seuil Ts, la diode polarisée en inverse conduit un courant Is.

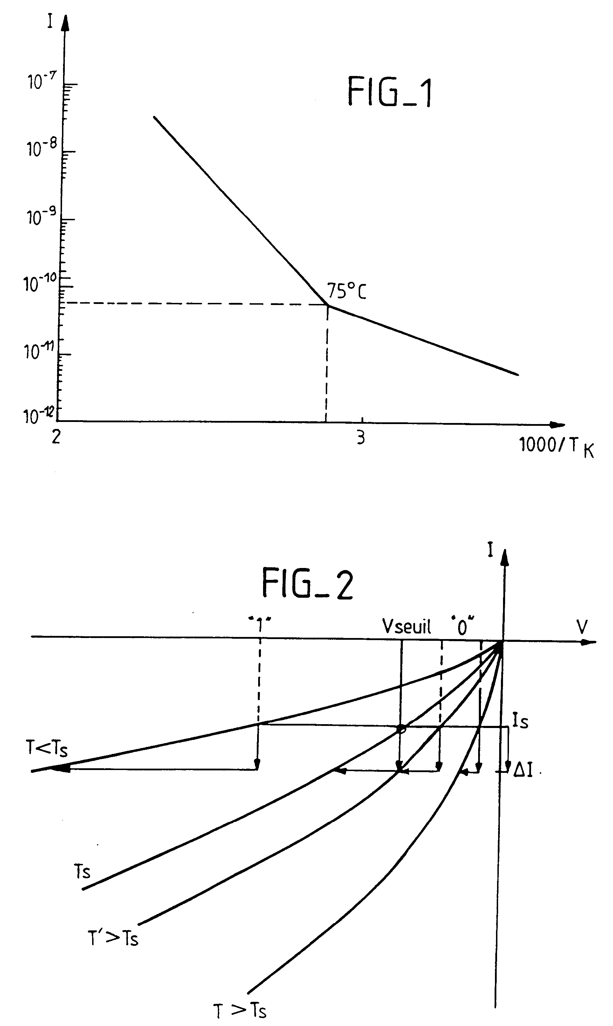

La figure 1 est un diagramme log₁₀ I = f (1000/T), où I est le courant de la diode polarisée en inverse et T la température en degré Kelvin du circuit intégré. La courbe correspondante est connue pour une diode donnée, c'est-à-dire pour une surface de jonction et une concentration d'impuretés données. Pour T inférieure ou égale à Ts, on a une première demi-droite et pour T supérieure ou égale à Ts, une seconde demi-droite de pente double de celle de la première. Pour T supérieure ou égale à Ts, le courant augmente beaucoup plus vite avec la température que pour T inférieure ou égale à Ts.

On utilise le phénomène physique décrit pour réaliser un détecteur de température. En effet, si on alimente la diode polarisée en inverse par un courant donné I, c'est la tension Vd aux bornes de la diode qui va varier avec la température : si la température augmente, la tension Vd diminue et au-delà de la température de seuil, elle diminue même très vite en deçà d'une tension Vₛₑᵤᵢₗ (figure 2). Si le courant I est égal au courant Is défini plus haut, un circuit de détection en tension dont la tension de basculement est égale à Vₛₑᵤᵢₗ et qui est placé aux bornes de la diode, bascule dès que la température Ts est atteinte dans le circuit (figure 2) : on a réalisé un détecteur de température. Ce détecteur est très sensible car au-delà de la température de seuil, la tension Vd devient très vite très petite.

comme le générateur qui alimente normalement la diode comporte un transistor ayant sa source ou son drain connecté à la tension d'alimentation positive Vcc, le courant dans la diode varie avec les variations de tension d'alimentation. On voit par exemple sur la figure 2 que si le courant Is augmente, le détecteur va basculer à une température T' > Ts : un tel montage classique ne convient donc pas.

Dans l'invention on utilise quand même ce phénomène physique mais avec alors un circuit d'alimentation en courant et dont la valeur du courant est indépendante de la tension d'alimentation.

L'invention comporte un circuit de détection comportant une diode polarisée en inverse par une tension d'alimentation caractérisé en ce que la diode est alimentée en courant constant par un générateur de courant constant indépendant des variations de la tension d'alimentation.

L'invention sera mieux comprise à la lecture de la description qui suit et à l'examen des figures qui l'accompagnent. Cette description qui est faite en référence aux figures ne l'est qu'à titre indicatif et nullement limitatif de l'invention. Dans ces figures :
- la figure 1 est un diagramme déjà commenté montrant la caractéristique log₁₀ I = f (1000/T) d'une diode polarisée en inverse,
- la figure 2 est un diagramme déjà commenté qui permet de décrire le principe de détection de la température de seuil selon l'invention,
- la figure 3 est un schéma électrique d'un détecteur de seuil de température conforme à l'invention,
- la figure 4 est une vue en coupe schématique de la liaison d'une diode avec le générateur de courant selon la figure 3 dans un substrat semi-conducteur d'un circuit intégré.

Les figures 1 et 2 décrivent le phénomène physique et le principe de détection d'un circuit de détection de seuil de températue conforme à l'invention. Elles ont été expliquées ci-avant.

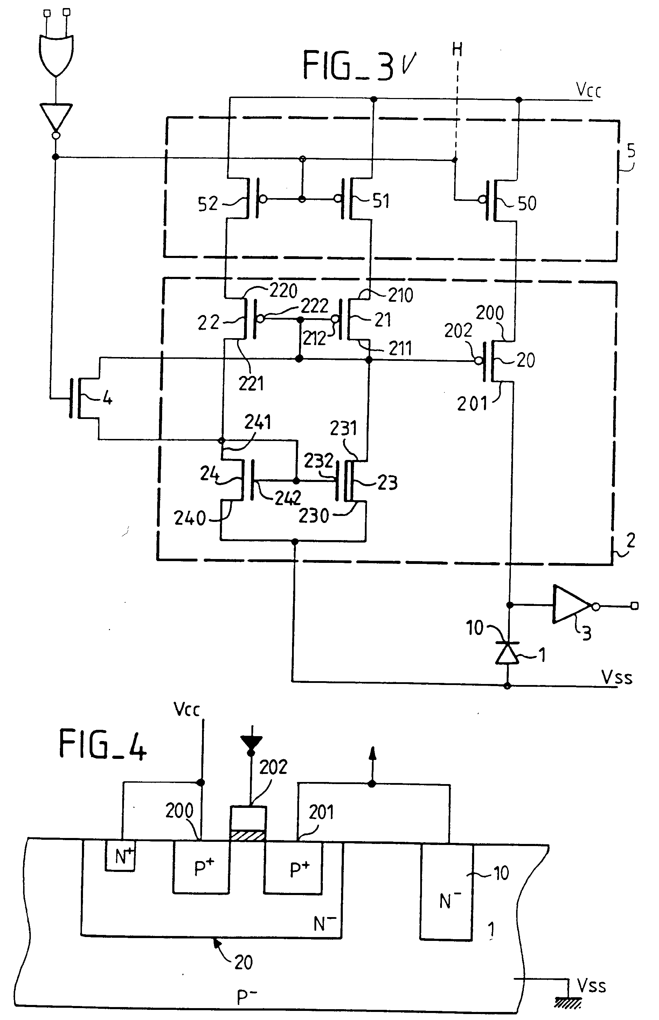

La figure 3 est un schéma électrique d'un circuit de détection selon l'invention. Ce schéma comprend une diode 1 polarisée en inverse et un générateur 2 d'un courant constant indépendant des variations de la tension d'alimentation Vcc. Ce générateur est placé entre la tension d'alimentation Vcc et la cathode de la diode. Il délivre un courant égal au courant Is de la diode, conformément au principe de détection déjà expliqué.

Au point de connexion de la diode au générateur, on place un amplificateur de détection 3 représenté sur la figure 3 par un simple inverseur logique. Ce n'est qu'un exemple de réalisation d'un amplificateur, d'autres connus sont possibles. Cet amplificateur délivre en sortie un signal binaire qui, par exemple, vaudra "1" lorsque, en valeur absolue, la valeur de la tension aux bornes de la diode est supérieure à la valeur de la tension de seuil et "0" quand elle est inférieure (figure 2). Le signal binaire est utilisé pour interdire, par exemple, tout accès au circuit intégré dès la détection du passage de la tension aux bornes de la diode au-dessous du seuil en valeur absolue.

Le générateur 2 comporte deux transistors MOS 20 et 21 à zone canal de même type N ou P, conducteurs et formant un miroir de courant. Le transistor 20 est la sortie du générateur de courant : il est en série avec la diode 1 qu'il alimente en courant Is. Le transistor 21 est à grille 212 et drain 211 connectés l'un à l'autre. Il est en série avec un transistor MOS 23 natif. Ce dernier et un transistor MOS 24 sont conducteurs, à zone canal de même type N ou P et forment un miroir de courant. La grille 242 et le drain 241 du transistor 24 sont connectés l'un à l'autre.

Dans un exemple préféré (figure 3), les transistors 20 et 21 sont à zone canal de type P et les transistors 23 et 24 sont à zone canal de type N, pour une réalisation du circuit en technologie CMOS. Les sources 200 et 210 des transistors 20 et 21 sont alors reliées à la tension d'alimentation positive Vcc. Les sources 230 et 240 des transistors 23 et 24 sont reliées à la masse Vss. Les drains 211 et 231 des transistors 21 et 23 sont connectés l'un à l'autre. Le drain 241 du transistor 24 est relié à la tension d'alimentation. Enfin, le drain 201 du transistor 20 est connecté à la cathode 10 de la diode 1. Sur la figure 3, un transistor à zone canal de type P est identifiable par un petit rond sur sa grille.

D'autres configurations sont bien sûr possibles il faut inverser les polarités et le rôle des zones source et drain pour passer d'un transistor à zone canal d'un type donné à un transistor à zone canal de type opposé. Toute la suite est écrite pour une configuration préférée (figure 3).

On entend par miroir de courant, le montage classique de transistors à zone canal de même type ayant leurs grilles réunies et leurs sources réunies. Le but d'un tel montage est de commander un courant dans une ou plusieurs branches du miroir à partir du courant d'une autre branche. Dans le montage décrit, les transistors 21 et 20 sont une première et une seconde branche du circuit. Les courants dans ces deux transistors sont alors égaux ou proportionnels, en fonction du rapport des géométries W/L de ces deux transistors, W étant la largeur et L la longueur de la zone canal d'un transistor MOS. Il faut cependant que ces deux transistors aient même tension de seuil. On rappelle que la tension de seuil d'un transistor MOS est la tension grille source qu'il faut appliquer au transistor pour qu'il commence à conduire.

Dans le miroir de courant formé par les transistors 20 et 21, c'est le transistor 21 qui commande le courant dans l'autre branche, soit le courant Is du transistor 20. En effet, le transistor 21 est monté en diode, car sa grille 212 et son drain 211 sont reliés l'un à l'autre. Il est conducteur car sa source 210 est à Vcc et son drain 211 indirectement à la masse. Il est en limite de conduction, c'est-à-dire avec une tension grille-source égale à sa tension de seuil V_{T}. En effet, prenons simplement le transistor 21 avec sa source 210 reliée à Vcc, sa grille 212 et son drain 211 reliés ensemble comme dans la figure 3. Mettons entre son drain 211 et la masse Vₛₛ, une résistance. Si la tension grille-source du transistor est grande devant la tension de seuil, le transistor 21 est très conducteur. On a alors une chute de tension donnée dans la résistance et la tension drain-source va chuter. Comme grille et drain sont reliés, la tension grille-source chute aussi. Si la tension grille-source est inférieure à la tension de seuil, le transistor est bloqué, donc la tension drain-source augmente car alors il n'y a pas de chute de tension aux bornes de la résistance. La tension grille-source augmente donc aussi et le transistor devient conducteur. On voit qu'un tel dispositif polarise à une tension grille-source constante le transistor 21. Cette tension grille-source est égale à la tension de seuil V_{T} pour une valeur de résistance donnée. Pour cette valeur de résistance, la chute de tension aux bornes de la résistance est Vcc - V_{T}.

Dans le montage de la figure 3, la résistance de charge est réalisée par un transistor 23. Le transistor 21 conduit donc un courant I qui commande le courant Is du transistor 20.

Le transistor 23 est polarisé à saturation à tension grille source constante comme on le verra plus loin, par le transistor 24. Le transistor 23 est aussi plus résistif que le transistor 21 avec une valeur de résistance interne telle que le transistor 21 est polarisé en limite de conduction. Le courant traversant les transistors 21 et 23 est alors le courant de saturation du transistor 23. Comme la tension grille-source du transistor 23 est constante, la valeur de la résistance interne du transistor 23 est constante et le courant de saturation est donc constant. Le courant de chaque branche du miroir de courant est donc constant : on atteint le but recherché. On a un générateur de courant constant.

Dans un montage préféré, les transistors 20 et 21 sont à tensions de seuil aussi proches que possible. Le transistor 20 est alors en limite de conduction comme le transistor 21, puisque la même tension grille-source lui est appliquée. Le courant Is est alors obtenu à partir du courant I du transistor 21 par le rapport des géométries W/L des transistors 21 et 20.

Par ailleurs, on sait que la tension de seuil d'un transistor MOS polarisé en direct augmente en valeur absolue avec la température, de l'ordre de 2 mv/° C. On sait qu'alors le courant dans le transistor diminue en particulier, le courant dans le transistor 20 diminue : l'amplificateur de détection va alors basculer pour une température inférieure à la température de seuil. Ceci est sans incidence, car on va seulement avoir une alarme un peu prématurée. On peut de plus projeter la variation du courant due à la variation de la tension de seuil avec la température, pour avoir le courant Is voulu à la température de seuil.

Les conditions de fonctionnement du transistor 23 sont expliquées dans la suite. Le transistor 23 est natif, c'est-à-dire à tension de seuil nulle. Un tel transistor est représenté sur une figure par une double barre entre sa source et son drain. Le transistor 23 forme avec le transistor 24 un autre miroir de courant. En particulier, une même tension grille-source leur est appliquée.

Le transistor 24 est conducteur. Il est monté en diode car sa grille 242 et son drain 241 sont interconnectés. Dans le montage préféré le transistor 24 est à zone canal de type N. Sa source 240 est connectée à la masse Vₛₛ et son drain 241 à la tension d'alimentation Vcc, indirectement. Si une résistance de charge de valeur suffisamment élevée est placée entre la tension d'alimentation Vcc et le drain 241 du transistor 24, celui-ci est polarisé à une tension grille-source égale à la tension de seuil V_{T}, du transistor 24. C'est le même phénomène déjà expliqué pour le transistor 21.

Dans ces conditions, comme la tension de seuil d'un transistor MOS a une valeur intrinsèque au transistor, donc indépendante des variations de tension d'alimentation, la tension grille-source du transistor 24 reste constante même si la tension d'alimentation Vcc varie. Le transistor 23 est donc commandé par une tension grille-source, celle du transistor 24, constante, indépendante des variations de tension d'alimentation.

De plus, la tension de seuil a une valeur absolue de l'ordre de 1 volt. Le transistor 23 natif est donc fortement conducteur. On montre qu'il est saturé car sa tension drain source qui vaut Vcc - V_{T} est supérieure à sa tension grille-source qui vaut V_{T'}.

Le courant du transistor 24 est commandé par celui, constant, du transistor 23, puisqu'ils forment un miroir de courant.

Pour mieux polariser le transistor 24 à courant constant, on améliore le générateur 2 précédemment décrit en utilisant à la place de la résistance de charge du transistor 24, un transistor MOS 22 conducteur, en série avec le transistor 24. Le transistor 22 forme un miroir de courant avec le transistor 21 : le transistor 21 commande le même courant dans le transistor 22 que le transistor 23 dans le transistor 24.

Dans le montage préféré, le transistor 22 est à zone canal de type P. Les transistors 24 et 22 sont reliés l'un à l'autre par leurs drains 241 et 221. La source 220 du transistor 22 est connectée à la tension d'alimentation Vcc.

A la mise sous tension, il faut cependant un certain temps pour que les transistors 21 et 24 soient polarisés en limite de conduction. Tant que cet état n'est pas atteint, la sortie du détecteur ne peut pas être prise en compte car on ne maîtrise pas le courant qui alimente la diode. Cet équilibre peut être long à atteindre. Pour remédier à cet inconvénient, on rend les transistors 21 et 24 conducteurs dès la mise sous tension. Ils vont aller très rapidement à leur état en limite de conduction.

Ceci est réalisable en utilisant un dispositif 4 d'initialisation, comportant un transistor MOS 4, commandé sur sa grille par un signal impulsionnel de mise en fonctionnement du circuit de détection. Les électrodes de source et de drain du transistor 4 sont reliées l'une à la grille du transistor 21, l'autre à la grille du transistor 24. Le signal impulsionnel est dit à l'état actif pendant une impulsion. Pour un état actif du signal impulsionnel, le transistor 4 est conducteur. Il est bloqué pour un état non actif. Quand il est conducteur, ses électrodes de source et de drain sont court-cicuitées et polarisent les grilles des transistors 21 et 24 à un potentiel positif commun compris entre Vss et Vcc. Les transistors 21 et 24 sont alors conducteurs et vont très vite en limite de conduction selon le processus déjà décrit.

Par ailleurs, on cherche à limiter la consommation de courant dans le circuit. On utilise pour cela un dispositif 5 de mise sous tension connu, analogue à un interrupteur, s'intercalant entre la tension d'alimentation Vcc et les électrodes du générateur de courant normalement reliées à la tension d'alimentation Vcc. Dans le montage préféré, ce dispositif 5 de mise sous tension est composé de trois transistors MOS 50, 51 et 52 tous à zone canal de même type N ou P, placés en série entre la tension d'alimentation Vcc et les sources respectivement des transistors 20, 21 et 22. Ces transistors 50, 51 et 52 sont commandés sur leur grille par un signal impulsionnel. Le signal impulsionnel est dit à l'état actif pendant une impulsion. Pendant l'état actif du signal impulsionnel, les transistors sont bloqués (interrupteur ouvert). Ils sont conducteurs sinon (interrupteur fermé). Ils ramènent alors dans ce dernier cas la tension d'alimentation Vcc à la source de chacun des transistors 20, 21 et 22 mettant ainsi en fonctionnement le circuit de détection de température.

On améliore ce dispositif 5 de mise sous tension en prenant comme signal impulsionnel celui qui commande aussi le dispositif 4 d'initialisation. En effet, il est inutile d'alimenter la diode et le générateur de courant tant que les transistors 21 et 24 ne sont pas conducteurs. C'est le type des zones canal des transistors dans chaque dispositif qui détermine la logique (positive ou négative) à utiliser dans chacun des deux dispositifs d'initialisation 4 et de mise sous tension 5. Dans l'exemple de la figure 1, les transistors 50, 51 et 52 du dispositif de mise sous tension 5 sont à zone canal de type P : Le signal impulsionnel aura donc, sur une impulsion, un niveau égal à Vcc, et un niveau égal à Vₛₛ sinon, dans le dispositif 5 de mise sous tension. Dans ces conditions, le dispositif 4 d'initialisation polarise à 0 volt la grille des transistors 21 et 24, par couplage capacitif. Dès que Vcc est amené sur la source du transistor 21, il est conducteur. Les sources des transistors 50, 51 et 52 sont connectées à la tension d'alimentation et les drains aux sources des transistors 20, 21 et 22 respectivement. Le transistor 4 du dispositif d'initialisation est, dans ce même exemple de la figure 1, à zone canal de type N l'impulsion du signal impulsionnel sera donc prise en logique positive dans le dispositif 4 d'initialisation. La source du transistor 4 est connectée à la grille du transistor 21 et le drain à la grille du transistor 24. En utilisant une même logique du signal impulsionnel pour les dispositifs 5 de mise sous tension et 4 d'initialisation, on économise un inverseur. Le signal impulsionnel correspond à un signal de mise en fonctionnement issu, par exemple, de la détection de la température de seuil : quand on détecte la température de seuil, on met hors fonctionnement le circuit.

La figure 4 est une vue en coupe schématique d'une implantation d'une diode 1 polarisée en inverse dont la cathode 10 (Zone N) est reliée au drain 201 d'un transistor MOS 20 à zone canal de type P conforme à l'exemple de la figure 3. On y distingue la grille 202, le drain 201 et la source 200 du transistor 20. De préférence tous les composants décrits sont intégrés sur un même substrat que celui du circuit intégré qu'ils sont censés protéger.

Par ailleurs, à une température donnée, inférieure au seuil de température, le circuit peut être utilisé pour la détection de présence de lumière ou pour la détection d'une fréquence de fonctionnement de ce circuit qui serait trop basse. Ce besoin se fait sentir pour éviter les effets des actions des fraudeurs qui pourraient être tentés d'enlever la couche de passivation du circuit intégré (celui-ci serait alors soumis à un éclairement révélateur de cette fraude), ou à des manipulations marche-arrêt à basse fréquence (qui pourraient ainsi modifier la fréquence d'horloge du circuit).

Le circuit de l'invention a pour principe de charger une diode polarisée en inverse par un courant donné I le plus stable possible. Or la lumière a pour effet d'augmenter le courant de fuite des jonctions polarisées en inverse dans un facteur de l'ordre de 1000 environ.

Si on se réfère à la figure 3, le transistor 20 qui constitue le générateur de courant constant est constitué avec un rapport W/L tel qu'il suffise à charger la diode en condition normale. En cas de présence de lumière, le courant de fuite de la diode 1 augmente et le transistor 20 ne suffit plus à la charger. Donc la tension sur la cathode de la diode baisse et le circuit 3, ou un autre comparateur dédié à cet effet spécifique, détecte la présence de lumière sur le produit.

Le même circuit de détecteur de la figure 3 permet de détecter une fréquence de fonctionnement trop basse d'un circuit intégré sur lequel ce circuit de détection est monté. Dans ce cas on peut modifier le rôle du transistor 50. Ce transistor 50 avait pour rôle de limiter le courant dans le circuit intégré, dans un mode faible consommation. En connectant la grille du transistor 50 au signal d'horloge du circuit intégré à protéger, on obtient facilement un détecteur de seuil de fréquence. En effet, le signal d'horloge étant un signal carré, symétrique, il vient alors ouvrir et fermer périodiquement le transistor 50. Quand le transistor 50 est conducteur (grille à 0V) on précharge la diode 1 montée en inverse. Quand le transistor 50 est non conducteur (grille à Vcc) on coupe la précharge. Ainsi si la fréquence d'horloge est suffisamment rapide, le potentiel sur la cathode de la diode n'a pas le temps de se décharger par les fuites de cette diode et le signal de détection reste inactif. Par contre si la fréquence d'horloge devient inférieure à un certain seuil (fonction de la diode et du courant de charge) ce potentiel baisse. Alors le circuit détecte une fréquence trop basse et l'inverseur 3 bascule. On a représenté sur la figure 3, en tiret, un mode d'application du signal d'horloge qui se substituerait au signal d'initialisation et d'économie de consommation précédemment décrit.

## Revendications

1. Circuit de détection comportant une diode (1) polarisée en inverse par une tension d'alimentation (Vcc) caractérisé en ce que la diode (1) est alimentée en courant constant par un générateur (2) de courant constant indépendant des variations de la tension d'alimentation (Vcc).

2. Circuit selon la revendication 1, caractérisé en ce que le générateur (2) de courant comporte un miroir de courant formé par deux transistors MOS 20 et 21, à zone canal de même type N, ou P, conducteurs ; le transistor 20 est la sortie du générateur (2) et sa source ou son drain, suivant qu'il est à zone canal de type P ou N, est connecté à la cathode de la diode (1).

3. Circuit selon la revendication 2, caractérisé en ce que le générateur (2) comporte un transistor MOS 23 en série avec le transistor 21, plus résistif que le transistor 21 et polarisé à saturation et à tension grille source constante pour fixer le courant dans le transistor 21.

4. Circuit selon la revendication 3, caractérisé en ce que le transistor 23 est natif et relié par sa grille à la grille et au drain d'un transistor MOS 24 à zone canal de même type N ou P, pour une polarisation à saturation et à tension grille source constante du transistor 23.

5. Circuit selon la revendication 4, caractérisé en ce que le générateur de courant comporte en outre un transistor MOS 22 en série avec le transistor 24, à zone canal de même type que celui du transistor 21, les transistors 21 et 22 formant un miroir de courant.

6. Circuit selon la revendication 5, caractérisé en ce que le générateur (2) de courant comporte un dispositif d'initialisation (4) réalisé par un transistor MOS 4, dont les électrodes de source et de drain sont reliées l'une à la grille du transistor 21 et l'autre à la grille du transistor 24, le transistor 4 étant commandé sur sa grille par un signal impulsionnel tel que le transistor 4 est conducteur sur un état actif du signal impulsionnel et bloqué sinon, pour rendre conducteurs les transistors 21 et 24 en polarisant leur grille.

7. Circuit selon la revendication 6, comportant un dispositif de mise sous tension (5) analogue à un interrupteur s'intercalant entre la tension d'alimentation Vcc et les électrodes du générateur de courant (2) reliées à la tension d'alimentation Vcc, caractérisé en ce qu'il est commandé par le même signal impulsionnel que celui commandant le dispositif d'initialisation (4) et tel que l'interrupteur est ouvert sur un état actif du signal impulsionnel et fermé sinon, pour ne pas consommer de courant pendant la polarisation des grilles des transistors 21 et 24.

8. Circuit selon l'une quelconque des revendications 3 à 7, caractérisé en ce que les transistors 21 et/ou 24 sont en limite de conduction.

9. Circuit selon l'une quelconque des revendications 1 à 8 caractérisée en ce que le détecteur est un détecteur de température.

10. Circuit selon l'une quelconque des revendications 1 à 8 caractérisé en ce que le détecteur est un détecteur de lumière.

11. Circuit selon l'une quelconque des revendications 1 à 8 caractérisé en ce que le détecteur est un détecteur de fréquence, un interrupteur (50) étant placé en série entre cette tension d'alimentation et la diode, un signal (H) de la fréquence à surveiller commandant cet interrupteur.

## Patentansprüche

1. Detektorschaltung mit einer durch eine Versorgungsspannung (Vcc) in Sperrichtung vorgespannten Diode (1), dadurch gekennzeichnet, daß die Diode (1) durch einen von den Schwankungen der Versorgungsspannung (Vcc) unabhängigen Konstantstromgenerator (2) mit Konstantstrom versorgt wird.

2. Schaltung nach Anspruch 1, dadurch gekennzeichnet, daß der Stromgenerator (2) einen durch zwei leitende MOS-Transistoren 20 und 21 mit einer Kanalzone des gleichen Typs n oder p gebildeten Stromspiegel aufweist; daß der Transistor 20 der Ausgang des Generators (2) ist, und daß je nachdem, ob er eine p- oder n-leitende Kanalzone aufweist, sein Source-Anschluß oder sein Drain-Anschluß mit der Kathode der Diode (1) verbunden ist.

3. Schaltung nach Anspruch 2, dadurch gekennzeichnet, daß der Generator (2) einen mit dem Transistor 21 in Reihe liegenden MOS-Transistor 23 aufweist, der resistiver als der Transistor 21 ist und in Sättigung und mit einer konstanten Gate-Source-Spannung vorgespannt ist, um den Strom in dem Transistor 21 zu fixieren.

4. Schaltung nach Anspruch 3, dadurch gekennzeichnet, daß der Transistor 23 nativ ist und mit seinem Gate-Anschluß mit dem Gate- und den Drain-Anschluß eines MOS-Transistors 24 mit einer Kanalzone des gleichen Typs n oder p verbunden ist, um eine Vorspannung bis zur Sättigung und einer konstanten Gate-Source-Spannung des Transistors 23 zu erreichen.

5. Schaltung nach Anspruch 4, dadurch gekennzeichnet, daß der Stromgenerator außerdem einen mit dem Transistor 24 in Reihe liegenden MOS-Transistor 22 mit einer Kanalzone des gleichen Typs wie der des Transistors 21 aufweist, wobei die Transistoren 21 und 22 einen Stromspiegel bilden.

6. Schaltung nach Anspruch 5, dadurch gekennzeichnet, daß der Stromgenerator (2) eine Initialisierungseinrichtung (4) aufweist, die durch einen MOS-Transistor 4 realisiert ist, dessen Source- und Drainanschlüsse mit dem Gate des Transistors 21 bzw. mit dem Gate des Transistors 24 verbunden sind, wobei der Transistor 4 an seinem Gate durch ein impulsförmiges Signal so gesteuert wird, daß der Transistor 4 bei einem aktiven Zustand des impulsförmigen Signals leitend und sonst gesperrt ist, um die Transistoren 21 und 24 unter Vorspannung ihres Gates leitend zu machen.

7. Schaltung nach Anspruch 6, die eine einem Schalter analoge Vorrichtung (5) zum Unterspannungsetzen aufweist, die zwischen die Versorgungsspannung Vcc und die Elektroden des Stromgenerators (2) geschaltet ist, die mit der Versorgungsspannung Vcc verbunden sind, dadurch gekennzeichnet, daß sie durch das gleiche impulsförmige Signal gesteuert wird, das die Initialisierungseinrichtung (4) steuert, und zwar so, daß der Schalter bei einem aktiven Zustand des impulsförmigen Signals geöffnet und sonst geschlossen ist, um während der Vorspannung der Gates der Transistoren 21 und 24 keinen Strom zu verbrauchen.

8. Schaltung nach einem der Ansprüche 3 bis 7, dadurch gekennzeichnet, daß sich die Transistoren 21 und/oder 24 in Grenzleitung befinden.

9. Schaltung nach einem der Ansprüche 1 bis 8, dadurch gekennzeichnet, daß der Detektor ein Temperaturdetektor ist.

10. Schaltung nach einem der Ansprüche 1 bis 8, dadurch gekennzeichnet, daß der Detektor ein Lichtdetektor ist.

11. Schaltung nach einem der Ansprüche 1 bis 8, dadurch gekennzeichnet, daß der Detektor ein Frequenzdetektor ist, wobei ein Schalter (50) zwischen der Versorgungsspannung und der Diode in Reihe sitzt, und wobei ein Signal (H) mit der zu überwachenden Frequenz diesen Schalter steuert.

## Claims

1. Detection circuit including a diode (1) which is reverse-biased by a supply voltage (Vcc), characterised in that the diode (1) is supplied with direct current by a generator (2) of direct current independent of the variations in the supply voltage (Vcc).

2. Circuit according to Claim 1, characterised in that the current generator (2) includes a current mirror formed by two MOS transistors (20 and 21) with conductive channel regions of the same type, n or p; the transistor 20 is the output of the generator (2), and its source or drain, depending on whether it has a p-type or n-type channel, is connected to the cathode of the diode (1).

3. Circuit according to Claim 2, characterised in that the generator (2) includes an MOS transistor 23 in series with the transistor 21, more resistive than the transistor 21 and biased to saturation and with constant gate-source voltage in order to fix the current in the transistor 21.

4. Circuit according to Claim 3, characterised in that the transistor 23 is native and connected by its gate to the gate and drain of an MOS transistor 24 with a channel region of the same type, n or p, for a saturation bias, and at a constant gate-source voltage of the transistor 23.

5. Circuit according to Claim 4, characterised in that the current generator also includes an MOS transistor 22 in series with the transistor 24, with a channel region of the same type as that of the transistor 21, the transistors 21 and 22 forming a current mirror.

6. Circuit according to Claim 5, characterised in that the current generator (2) includes an initialisation device (4) formed by an MOS transistor 4, the source and drain electrodes of which are connected, one to the gate of the transistor 21 and the other to the gate of the transistor 24, the transistor 4 being controlled at its gate by a pulse signal such that the transistor 4 is conductive for an active state of the pulse signal and non-conductive otherwise, so as to make the transistors 21 and 24 conductive by biasing their gates.

7. Circuit according to Claim 6, including an energising device (5) similar to a switch interposed between the supply voltage Vcc and the electrodes of the current generator (2) connected to the supply voltage Vcc, characterised in that it is controlled by the same pulse signal as the one controlling the initialisation device (4) and such that the switch is open for an active state of the pulse signal and closed otherwise, so as not to consume any current during the biasing of the gates of the transistors 21 and 24.

8. Circuit according to any one of Claims 3 to 7, characterised in that the transistors 21 and/or 24 are at the conduction limit.

9. Circuit according to any one of Claims 1 to 8, characterised in that the detector is a temperature detector.

10. Circuit according to any one of Claims 1 to 8, characterised in that the detector is a light detector.

11. Circuit according to any one of Claims 1 to 8, characterised in that the detector is a frequency detector, a switch (50) being placed in series between this supply voltage and the diode, a signal (H) of the frequency to be monitored controlling this switch.
